# EUROPÄISCHE PATENTSCHRIFT

(11) **EP 3 941 158 B1**
(45) Veröffentlichungstag und Bekanntmachung des Hinweises auf die Patenterteilung: **20.08.2025**
(21) Anmeldenummer: 21179251.0
(22) Anmeldetag: 14.06.2021
(51) Int. Cl.: H05B 6/12, A47J 36/32

(54) **KOCHSYSTEM UND VERFAHREN ZUM BETREIBEN**
COOKING SYSTEM AND METHOD FOR OPERATING SAME
SYSTÈME DE CUISSON ET PROCÉDÉ DE FONCTIONNEMENT

(30) Priorität: 14.07.2020 DE 102020118482
(43) Veröffentlichungstag der Anmeldung: 19.01.2022
(73) Patentinhaber: Miele & Cie. KG, 33332 Gütersloh (DE)
(72) Erfinder: Ennen, Volker, 32257 Bünde (DE); Stahl, Hermann, 32289 Rödinghausen (DE); Holtmann, Frank, 32120 Hiddenhausen (DE); Müller, Christoph, 32289 Rödinghausen (DE)

(56) Entgegenhaltungen:
- EP-A1- 1 742 144
- EP-A1- 3 096 586
- EP-A2- 2 708 818
- WO-A1-2019/012354
- DE-A1- 102012 216 719

## Beschreibung

Die vorliegende Erfindung betrifft ein Kochsystem umfassend wenigstens eine Kochfeldeinrichtung, wenigstens ein Kochgeschirr, wenigstens eine Bedieneinrichtung mit wenigstens einem Bedienelement und wenigstens eine Kommunikationseinrichtung. Dabei ist mittels der Kommunikationseinrichtung eine Kommunikation zwischen der Kochfeldeinrichtung und dem Kochgeschirr möglich ist. Die Kochfeldeinrichtung umfasst wenigstens eine Aufstellfläche für das Kochgeschirr und wenigstens zwei unterhalb der Aufstellfläche angeordnete Induktionseinrichtungen, welche einzeln und/oder zusammen als Kochzone je nach Aufstellposition des Kochgeschirrs mittels der Bedieneinrichtung angesteuert werden können. Die vorliegende Erfindung betrifft zudem eine Kochfeldeinrichtung und ein Kochgeschirr für ein solches Kochsystem und weiterhin ein Verfahren zum Betreiben eines solchen Kochsystems.

Es sind verschiedene Arten von Kochfeldern bekannt geworden, welche in der Regel mehrere separat steuerbare Kochzonen umfassen. Dabei sind z. B. bei Induktionskochfeldern unterhalb der Aufstellfläche für Töpfe und Pfannen und dergleichen mehrere Induktionsspulen vorgesehen, mittels welcher ein auf der Aufstellfläche oberhalb dieser Induktionsspulen aufstehendes Kochgeschirr erhitzt werden kann.

Neben Induktionskochfeldern mit festen Kochzonen sind auch Vollflächeninduktionskochfelder bekannt geworden, bei welchen keine vorgegebenen Kochzonen vorgesehen sind, sondern bei welchen Induktionsspulen zu Kochzonen zusammengeschaltet werden, um eine besonders flexible Nutzungsmöglichkeit zu erreichen.

Bei derartigen Kochfeldern ohne feste Kochzonen besteht jedoch in der Regel keine 1:1 Zuordnung von einer Kochzone zu einer Bedienmöglichkeit. Da eine direkte räumliche Zuordnung nicht in allen Fällen intuitiv erkennbar ist, kann eine Unterstützung bei der Zuordnung von Gargeschirr und Gargefäß hilfreich sein.

Das gleiche Problem der fehlenden intuitiven Zuordnung von Bedienelementen zu einem Kochgeschirr besteht auch bei sogenannten vollintegrierten Kochfeldern. Dabei wird bei solchen Kochfeldern die Aufstellfläche durch die Arbeitsfläche bereitgestellt. Die Leistungselektronik des Kochfeldes ist unterhalb der Arbeitsfläche bzw. der Arbeitsplatte vorgesehen. Auch hier gibt es keine Markierung zu Kochzonen.

Im Stand der Technik sind hierzu verschiedene Lösungsansätze bekannt geworden. Die DE 10 2014 207 261 B4 beschreibt beispielsweise eine leuchtende Verbindungslinie von Spulen unter einem Gargeschirr zu dem dazugehörigen Bedienelement. Eine derartige Verknüpfung zwischen Kochgeschirr und Bedienelement ist jedoch relativ unflexibel und kann bei vollintegrierten Kochfeldern nicht verwendet werden, da die Optik der Arbeitsfläche in der Regel nicht oder möglichst wenig verändert werden soll.

Die Druckschrift EP 3 096 586 A1 zeigt eine Gattungsgemäße Lösung für die Zuordnung eines Gargeschirrs zu einem Bedienelement einer Kochfeld-Bedienerschnittstelle.

Die Druckschrift WO 2019 012 354 A1 offenbart ein Gargeschirr in dessen unmittelbarer Umgebung, insbesondere an der Wandung des Gargeschirrs, Anzeigemittel vorgesehen sind, welche den Benutzer über eine Positionierung des Gargeschirrs relativ zu einem Heizelement informieren.

Die Druckschrift DE 10 2012 216 719 A1 zeigt ein Gargeschirr mit einer Bedien- und Anzeigevorrichtung am Griff des Gargeschirrs. Durch den Einsatz dieser Bedien- und Anzeigevorrichtung sind Eingabe- und Anzeigemittel am Kochfeld obsolet.

Die Druckschrift EP 1 742 144 A1 zeigt eine Projektionseinrichtung zur Darstellung der Bedien- und Anzeigemittel eines Kochfeldes.

Die Verwendung eines drehbaren Eingabemittels an einem Kochfeld ist aus der Druckschrift EP 2 708 818 A2 bekannt.

Es ist die Aufgabe der vorliegenden Erfindung eine Zuordnung von Kochgeschirr zu einem dazugehörigen Bedienelement zu verbessern und eine einfache und zuverlässige Anzuzeige bereitzustellen.

Diese Aufgabe wird gelöst durch ein Kochsystem mit den Merkmalen des Anspruchs 1, durch ein Kochgeschirr mit den Merkmalen des Anspruchs 11, durch eine Kochfeldeinrichtung mit den Merkmalen des Anspruchs 12, durch eine Bedieneinrichtung mit den Merkmalen des Anspruchs 13 und durch ein Verfahren zum Betreiben es Kochsystem mit den Merkmalen des Anspruchs 14. Bevorzugte Weiterbildungen der Erfindung sind Gegenstand der Unteransprüche. Weitere Vorteile und Merkmale der Erfindung ergeben sich aus den Ausführungsbeispielen.

Das erfindungsgemäße Kochsystem umfasst wenigstens eine Kochfeldeinrichtung, wenigstens ein Kochgeschirr, wenigstens eine Bedieneinrichtung mit wenigstens einem Bedienelement und wenigstens eine Kommunikationseinrichtung. Dabei ist mittels der Kommunikationseinrichtung eine Kommunikation zwischen der Kochfeldeinrichtung und dem Kochgeschirr möglich. Die Kochfeldeinrichtung umfasst wenigstens eine Aufstellfläche für Kochgeschirr und wenigstens zwei unterhalb der Aufstellfläche angeordnete Induktionseinrichtungen, welche einzeln und/oder zusammen als Kochzone je nach Aufstellposition des Kochgeschirrs mittels der Bedieneinrichtung angesteuert werden können. Dabei umfasst die Bedieneinrichtung wenigstens eine Anzeigeeinrichtung und das Kochgeschirr umfasst wenigstens eine Anzeigeeinrichtung, wobei über das wenigstens zeitweise Anzeigen wenigstens einer gleichen und/oder korrespondierenden Eigenschaft auf den Anzeigeeinrichtungen eine Zuordnung des Kochgeschirrs zu dem Bedienelement erfolgt.

Die Kochfeldeinrichtung ist insbesondere als Flächeninduktionskochfeld und bevorzugt als vollintegriertes Flächeninduktionskochfeld ausgebildet. Dabei sind bei derartigen Kochfeldern vorzugsweise eine Vielzahl von Induktionseinrichtungen bzw. Induktionsspulen unterhalb einer Aufstellfläche für Kochgeschirr vorgesehen, welche je nach Bedarf zu Kochzonen zusammengeschaltet werden können, sodass eine optimale Beheizung eines aufgestellten Kochgeschirrs erfolgen kann. Bei solchen Kochfeldern sind insbesondere keine festen Kochzonen vorgesehen und dementsprechend auch nicht auf der Aufstellfläche angedeutet. Dieses ist insbesondere auch dann der Fall, wenn ein vollintegriertes Kochfeld vorgesehen ist. Dabei werden vollintegrierte Kochfelder vorzugsweise in eine bestehende Arbeitsfläche integriert und sind somit nicht unmittelbar zu erkennen. Gerade bei solchen Kochfeldern erleichtert das erfindungsgemäße Kochsystem erheblich die Bedienung bzw. das Einstellen einer Leistungsstufe für ein spezielles Kochgeschirr auf der Aufstellfläche.

Die Bedieneinrichtung ist bevorzugt in die Kochfeldeinrichtung integriert bzw. der Kochfeldeinrichtung zugeordnet. Je nach Ausgestaltung ist jedoch bevorzugt, dass eine separate Bedieneinrichtung vorgesehen ist, über welche die Kochfeldeinrichtung und je nach Ausgestaltung auch weitere Geräte bedient werden können.

Dass die Bedieneinrichtung die zu einer Kochzone zusammengefassten Induktionseinrichtungen ansteuern kann heißt insbesondere, dass mittels des Bedienelements beispielsweise eine Leistungsstufe eingestellt werden kann. Dabei umfasst die Kochfeldeinrichtung vorzugsweise wenigstens eine Steuereinrichtung, welche insbesondere unter Berücksichtigung einer Topfpositionserkennung, beispielsweise durch die Kommunikationseinrichtung, eine oder mehrere Induktionsspulen vollständig und/oder anteilig zu einer variablen Kochzone zusammenfasst. Über die Bedieneinrichtung kann dann beispielsweise die Leistungsstufe der Induktionseinrichtungen einer Kochzone eingestellt werden.

Die Kommunikationseinrichtung umfasst vorzugsweise wenigstens eine Empfangseinrichtung wenigstens eine Sendeeinrichtung. Dabei ist insbesondere bevorzugt, dass mittels der Kommunikationseinrichtung eine Bestimmung der Topfposition bzw. der Position des Kochgeschirrs auf der Aufstellfläche erfolgen kann. Weiterhin ist es bevorzugt, dass über die Kommunikationseinrichtung sichergestellt wird, dass eine gleiche bzw. korrespondierende Eigenschaften auf den Anzeigeeinrichtungen angezeigt wird.

Erfindungsgemäß ist als gleiche oder korrespondierenden Eigenschaft auf der Anzeigeeinrichtung des Kochgeschirrs und auf der Anzeigeeinrichtung der Bedieneinrichtung eine gleiche Zahl und/oder eine gleiche Form und/oder ein gleiches Symbol angezeigt. So kann ein Bedienelement eindeutig einem bestimmten Kochgeschirr auf der Aufstellfläche zugeordnet werden.

Bei mehreren Bedienelementen und/oder mehreren Kochgeschirren kann eine Zuordnung dann durch die unterschiedlichen Eigenschaften erfolgen.

Ist nur ein Bedienelement für mehrere Kochzonen und/oder Kochgeschirre vorgesehen, kann bei der Anzeigeeinrichtung der Bedieneinrichtung vorzugsweise vorgesehen sein, dass die unterschiedlichen und/oder korrespondierenden Eigenschaften zu den Kochgeschirren durchgewählt bzw. durchgeschaltet werden können, um eine aktiv zu steuernde Kochzone für ein bestimmtes Kochgeschirr auszuwählen.

Das erfindungsgemäße Kochsystem bietet viele Vorteile. Insbesondere ist es möglich, auch bei Flächeninduktionskochfeldern und/oder vollintegrierten Kochfeldern mit variablen bzw. nicht markierten Kochzonen einem Benutzer eine eindeutige Zuordnung von einem Bedienelement zu einem bestimmten Kochgeschirr zu ermöglichen.

So wird ein Benutzer intuitiv und einfach dabei unterstützt, den Kochprozess für ein bestimmtes Kochgeschirr mittels der Bedieneinrichtung einzustellen. Dabei werden insbesondere keine in oder an der Aufstellfläche verbauten Leuchtelemente benötigt, welche die Flexibilität der Anzeige erheblich einschränken, zudem bei in eine Arbeitsplatte vollintegrierten Kochfeldern auch nicht möglich bzw. nicht gewollt sind.

Zudem wird erreicht, dass durch eine separate Anzeigeeinrichtung in der Bedieneinrichtung und dem Kochgeschirr möglich ist, die Bedieneinrichtung auch abseits der Kochfeldeinrichtung bzw. als externe Bedieneinrichtung auszugestalten. Insbesondere ist dann auch die Steuerung über eine App oder dergleichen möglich, in welcher bestimmte gleiche bzw. korrespondierende Eigenschaften angezeigt werden, um ein zu steuerndes Kochgeschirr einem Bedienelement zuzuordnen.

Bevorzugt ist die Bedieneinrichtung der Kochfeldeinrichtung zugeordnet. Dabei ist insbesondere bevorzugt, dass die Bedieneinrichtung von der Kochfeldeinrichtung umfasst ist bzw. die Bedieneinrichtung des Kochfeldes ist. Bei einer solchen Ausgestaltung umfasst die Bedieneinrichtung des Kochfeldes und/oder ein Bedienelement der Bedieneinrichtung die Anzeigeeinrichtung, sodass korrespondierende und/oder gleiche Eigenschaften angezeigt werden können.

Besonders bevorzugt ist die Bedieneinrichtung als separate Baugruppe ausgebildet. Dabei kann die Bedieneinrichtung insbesondere als separate Baugruppe ausgebildet und/oder eine separate Baugruppe integriert sein. So kann beispielsweise die Bedieneinrichtung als einzige oder auch als zusätzliche separate Steuerung vorgesehen sein, beispielsweise auf einem mobilen Gerät und/oder auf einem Smartphone, einem Tablett oder einer ähnlichen Einrichtung. Insbesondere ist dann die Bedieneinrichtung in eine App integriert bzw. als App ausgebildet.

In zweckmäßigen Ausgestaltungen umfasst die Anzeigeeinrichtung des Kochgeschirrs und/oder die Anzeigeeinrichtung der Bedieneinrichtung wenigstens eine Leuchteinrichtung mit wenigstens einem Leuchtelement. So kann bei einer derartigen Ausgestaltung eine Zuordnung eines Kochgeschirrs zu einem bestimmten Bedienelement beispielsweise über ein Lichtsignal erfolgen. So ist insbesondere bevorzugt, dass unterschiedliche Lichtfarben und/oder eine unterschiedliche Anzahl von Leuchtelementen unterschiedliche Kochgeschirre codieren.

In zweckmäßigen Ausgestaltungen umfasst die Leuchteinrichtung wenigstes eine Lichtquelle, wobei das Leuchtelement vorzugsweise als lichtauskoppelndes Element ausgebildet ist. So kann beispielsweise getrennt von dem Leuchtelement bzw. dem lichtauskoppelnden Element eine Lichtquelle vorgesehen sein, sodass das Leuchtelement auch an Stellen mit wenig Bauraum vorgesehen werden kann. Die Verbindung zwischen Lichtquelle und Leuchtelement bzw. dem lichtauskoppelnden Element kann vorzugsweise über wenigstens einen Lichtleiter oder dergleichen erfolgen.

Bevorzugt umfasst die Anzeigeeinrichtungen des Kochgeschirrs und/oder die Anzeigeeinrichtungen der Bedieneinrichtung wenigstes eine Projektionseinrichtung. Eine solche Projektionseinrichtung ermöglicht insbesondere das Projizieren von Farben, Formen, Zahlen und/oder Bildern auf eine Projektionsfläche, wobei beispielsweise bei einem Kochgeschirr die Projektionsfläche die Aufstellfläche für das Kochgeschirr sein kann. Dann ist es insbesondere möglich, wenigstens eine Eigenschaft bzw. ein Symbol auf das Kochfeld zu projizieren. Das Leuchtelement kann vorzugsweise Teil der Projektionseinrichtung sein und/oder die Projektionseinrichtung zu Verfügung stellen.

Besonders bevorzugt umfasst die Anzeigeeinrichtung des Kochgeschirrs und/oder die Anzeigeeinrichtung der Bedieneinrichtung wenigstens ein Display. Auch bei einer solchen Ausgestaltung können gleiche und/oder korrespondierende Eigenschaften zur Codierung wenigstens eines Kochgeschirrs zu einem Bedienelement angezeigt werden. Insbesondere bei einem Display können die Bedienelemente auch als Softkey oder dergleichen zur Verfügung gestellt werden.

In zweckmäßigen Weiterbildungen ist das Leuchtelement in wenigstens einem Griff und/oder an wenigstens einer Wandung des Kochgeschirrs und/oder an wenigstens einem Deckel des Kochgeschirrs angeordnet bzw. vorgesehen. Dabei ist insbesondere bevorzugt, dass das Leuchtelement als Leuchtstreifen bzw. länglicher Leuchtstreifen, als punktuelles Leuchtelement, als mehrere punktuelle oder streifige Leuchtelemente und/oder dergleichen vorgesehen sind. So kann beispielsweise über die unterschiedliche Farbe eines Leuchtstreifens eine Zuordnung zu einem Bedienelement erfolgen. Je nach Ausgestaltung kann auch eine Zuordnung über die Anzahl der beleuchteten Elemente erfolgen.

Vorzugsweise ist das Bedienelement als Bedienknebel ausgebildet, wobei die Anzeigeeinrichtung an dem Bedienknebel vorgesehen ist. Dann kann beispielsweise ein fester bzw. ein fest montierter Knebel und/oder ein abnehmbarer Knebel vorgesehen sein, wobei insbesondere ein Leuchtring als Leuchtelement bzw. als Anzeigeeinrichtung an dem Knebel vorgesehen ist.

Bevorzugt ist nur ein Bedienelement für mehrere Kochzonen bzw. für mehrere Kochgeschirre vorgesehen, wobei ein Benutzer die einzelnen Kochzonen bzw. Kochgeschirre durch das Anwählen einer bestimmten angezeigten Eigenschaft ansteuern kann. Dabei ist insbesondere bevorzugt, dass ein Benutzer über eine intuitive Bedienung die unterschiedlichen Eigenschaften und somit die Steuerung der unterschiedlichen Kochgeschirre durchwählen kann, sodass ein einfaches Einstellen von Leistungsparametern zu einem Kochgeschirr erfolgen kann.

Bevorzugt weist das Kochgeschirr wenigstens abschnittsweise eine doppelwandige Wandung auf, wobei die Anzeigeeinrichtungen des Kochgeschirrs wenigstens teilweise in der doppelwandigen Wandung angeordnet ist. So ist es insbesondere bei einer derartigen Ausgestaltung möglich, die Anzeigeeinrichtung möglichst platzsparend in einem Kochgeschirr unterzubringen.

Besonders bevorzugt ist die Anzeigeeinrichtung des Kochgeschirrs wenigstens teilweise in wenigstens einem Griff des Kochgeschirrs angeordnet. Je nach Ausgestaltung kann auch die Anordnung der Anzeigeeinrichtung in dem Deckel und/oder einem anderen Zubehörteil des Kochgeschirrs möglich sein. Bei einer solchen Ausgestaltung kann die Anzeigeeinrichtung vorteilhaft untergebracht werden.

In zweckmäßigen Weiterbildungen ist wenigstens eine Lichtquelle in wenigstens einem Griff des Kochgeschirrs vorgesehen, und wenigstens ein lichtauskoppelndes Element ist in und/oder an wenigstens einer Wandung des Kochgeschirrs und/oder an wenigstens einem Deckel des Kochgeschirrs vorgesehen. Dabei ist die Lichtquelle insbesondere mit einem Lichtleiter oder dergleichen mit dem Leuchtelement bzw. dem lichtauskoppelnden Element verbunden. Bei einer derartigen Ausgestaltung ist es insbesondere möglich, die Lichtquelle separat von dem lichtauskoppelnden Element unterzubringen, wobei je nach Ausgestaltung des Kochgeschirrs in einem Griff ausreichend Platz für die Lichtquelle zur Verfügung steht.

In zweckmäßigen Ausgestaltungen ist mittels der Anzeigeeinrichtungen des Kochgeschirrs wenigstens ein Leistungsparameter der zugehörigen Kochzone anzeigbar. Dann kann beispielsweise über die Anzahl von Leuchtelementen eine Codierung eines Leistungsparameters erfolgen. Wenn die Anzeigeeinrichtung als Display ausgebildet ist, beispielsweise an dem Griff eines Kochgeschirrs, kann auch hier ein Leistungsparameter, beispielsweise Leistungsstufe angezeigt werden. Auch wenn die Anzeigeeinrichtungen eine Projektionseinrichtung umfasst, kann vorteilhaft neben der Codierung zu einem bestimmten Bedienelement auch ein Leistungsparameter auf die Aufstellfläche projiziert werden.

Vorzugsweise ist das Kochgeschirr dazu geeignet und ausgebildet, Energie über Energy-Harvesting bereitzustellen.

Das erfindungsgemäße Kochgeschirr dazu ist zur Verwendung in einem Kochsystem ausgebildet, wie es zuvor beschrieben wurde.

Die erfindungsgemäße Kochfeldeinrichtung ist zur Verwendung in einem Kochsystem ausgebildet, wie es zuvor beschrieben wurde.

Die erfindungsgemäße Bedieneinrichtung ist zur Verwendung in einem Kochsystem ausgebildet, wie es zuvor beschrieben wurde.

Auch das erfindungsgemäße Kochgeschirr und die erfindungsgemäße Kochfeldeinrichtung bieten die Vorteile, wie sie zuvor schon zu dem Kochsystem ausgeführt wurden. Insbesondere wird einem Benutzer eine eindeutige Zuordnung von Kochgeschirr zu einem Bedienelement angezeigt, sodass insbesondere auch bei Flächeninduktionskochfeldern bzw. bei einem in eine Arbeitsfläche vollintegrierten Kochfeld eine intuitive Steuerung der Kochprozesse auch bei mehreren Kochgeschirren erfolgen kann.

Das erfindungsgemäße Verfahren eignet sich zum Betreiben eines Kochsystems, wie es zuvor beschrieben wurde. Dabei erfolgt über das wenigstens zeitweise Anzeigen wenigstens einer gleichen und/oder korrespondierenden Eigenschaft auf der Anzeigeeinrichtung der Bedieneinrichtung und der Anzeigeeinrichtung des Kochgeschirrs eine Zuordnung des Kochgeschirrs zu einem Bedienelement.

Auch das erfindungsgemäße Verfahren bietet viele Vorteile. Insbesondre wird einem Benutzer leicht verständlich und eindeutig angezeigt, welches Bedienelement welche Kochzone für welches Kochgeschirr steuert, sodass eine intuitive und eindeutige Steuerung von Leistungsparametern zu bestimmten Kochgeschirren erfolgen kann.

Bevorzugt ist nur ein Bedienelement für mehrere Kochzonen vorgesehen, wobei Benutzer ein bestimmtes zu steuerndes Kochgeschirr durch das Anwählen einer bestimmten Eigenschaft auswählt. Dabei kann beispielsweise ein Knebel bzw. ein Bedienknebel als Bedienelement vorgesehen sein, auf welchem jeweils nur die aktiv zu steuernde der Kochzone bzw. die Eigenschaft zu dieser Kochzone angezeigt wird. Beispielsweise durch ein Kippen, ein Drücken und/oder ein Drehen kann zwischen unterschiedlichen Eigenschaften und somit zwischen dem Bedienen unterschiedlicher Kochzonen ausgewählt werden. Auch wenn ein Display als Anzeigeeinrichtung vorgesehen ist, kann hier durch das Auswählen einer bestimmten Eigenschaft eine bestimmte Kochzone bzw. ein bestimmtes Kochgeschirr angewählt werden.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine rein schematische Darstellung eines Ausführungsbeispiels eines erfindungsgemäßen Kochsystems in einer perspektivischen Ansicht;
- Figur 2: eine rein schematische Darstellung eines weiteren Ausführungsbeispiels eines erfindungsgemäßen Kochsystems;
- Figur 3: eine rein schematische Darstellung eines nächsten Ausführungsbeispiels eines erfindungsgemäßen Kochsystems;
- Figur 4: eine rein schematische Darstellung eines anderen Ausführungsbeispiels eines erfindungsgemäßen Kochsystems;
- Figur 5: eine rein schematische Darstellung eines weiteren Ausführungsbeispiels eines erfindungsgemäßen Kochsystems;
- Figur 6: eine rein schematische Darstellung eines Ausführungsbeispiels eines erfindungsgemäßen Kochgeschirrs in einer Seitenansicht;
- Figur 7: eine rein schematische Darstellung eines weiteren Ausführungsbeispiels eines erfindungsgemäßen Kochgeschirrs in einer Seitenansicht;
- Figur 8: eine rein schematische Darstellung eines anderen Ausführungsbeispiels eines erfindungsgemäßen Kochgeschirrs in einer Seitenansicht; und
- Figur 9: eine rein schematische Darstellung eines nächsten Ausführungsbeispiels eines erfindungsgemäßen Kochgeschirrs in einer Seitenansicht.

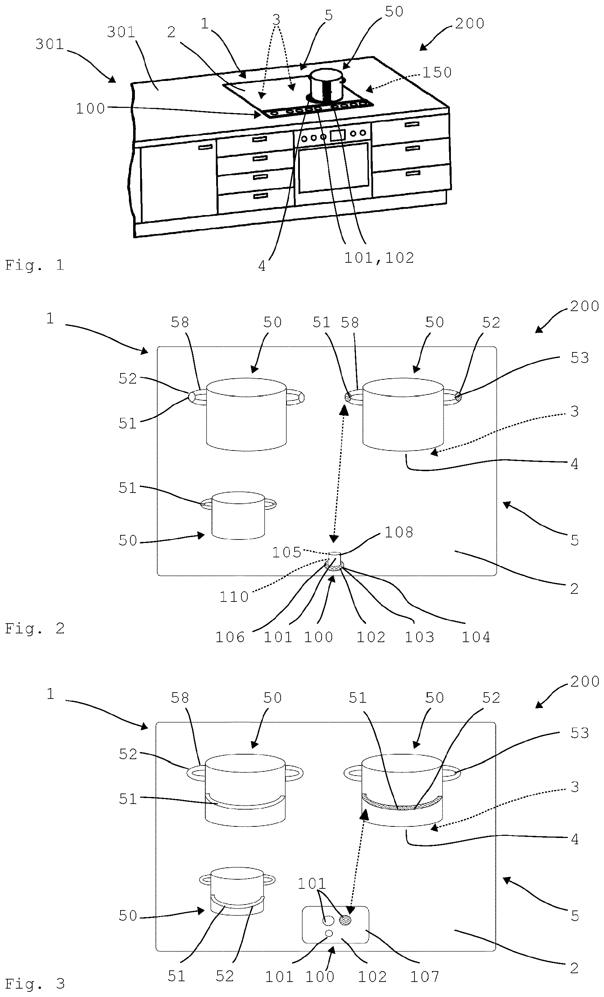

In Figur 1 ist rein schematisch eine Küchenzeile 300 mit einem erfindungsgemäßen Kochsystem 200 dargestellt. Das erfindungsgemäße Kochsystem 200 umfasst in dem hier gezeigten Ausführungsbeispiel eine erfindungsgemäße Kochfeldeinrichtung 1 und erfindungsgemäßes Kochgeschirr 50. Die Kochfeldeinrichtung 1 ist dabei dem hier gezeigten Ausführungsbeispiel als Flächeninduktionskochfeld 5 ausgebildet, welches hier in die Arbeitsplatte 301 der Küchenzeile 300 eingelassen ist.

Das Kochsystem 200 umfasst weiterhin eine Kommunikationseinrichtung 150, welche hier nicht näher dargestellt ist. Die Kommunikationseinrichtung 150 dient dazu, eine Kommunikation zwischen Kochfeldeinrichtung 1 und dem Kochgeschirr 50 zu ermöglichen.

Zudem umfasst das erfindungsgemäße Kochsystem 200 eine Bedieneinrichtung 100, welche in dem hier gezeigten Ausführungsbeispiel Teil der Kochfeldeinrichtung 1 bzw. des Flächeninduktionskochfeldes 5 ist.

Die Kochfeldeinrichtung 1 umfasst eine Aufstellfläche 2 für Kochgeschirr 50, wobei unterhalb der Aufstellfläche 2 in dem hier gezeigten Ausführungsbeispiel eine Vielzahl von Induktionseinrichtungen 3 bzw. von Induktionsspulen 3 angeordnet sind, welche über eine nicht näher dargestellte Steuereinrichtung je nach aufgestellten Kochgeschirr 50 zu einer Kochzone 4 zusammengefasst bzw. zusammengeschaltet werden können. Mittels der Bedieneinrichtung 100 bzw. mittels eines entsprechenden Bedienelements 101 der Bedieneinrichtung 100 können diese einzelnen Kochzonen 4 angesprochen bzw. es können Leistungsparameter zu diesen Kochzonen 4 eingestellt werden.

Insbesondere bei Flächeninduktionskochfeldern 5, bei welchen die unterhalb der Aufstellfläche 2 befindlichen Induktionseinrichtung 3 frei zu Kochzonen 4 zusammengeschaltet werden können, ist die Zuordnung von bestimmten Bedienelementen 101 zu dem entsprechenden Kochgeschirr 50 einer Kochzone 4 nicht immer einfach.

Dabei ist im Stand der Technik beispielsweise eine Beleuchtung an und/oder unterhalb der Aufstellfläche 2 bekannt geworden, wobei durch das entsprechende Anzeigen einer leuchtenden Linie oder dergleichen von einem Kochgeschirr 50 bzw. einer Kochzone 4 zu einem Bedienelement 101 eine Zuordnung erreicht wird. Diese Ausgestaltung ist jedoch relativ unflexibel und es ist notwendig, dass die Bedieneinrichtung 100 dem Kochfeld zugeordnet ist.

Bei dem erfindungsgemäßen Kochsystem 200 kann die Bedieneinrichtung jedoch je nach Ausgestaltung auch als separate Baugruppe ausgeführt sein. Es sind wie den nachfolgenden Figuren näher dargestellt nämlich an der Bedieneinrichtung 100 eine Anzeigeeinrichtung 102 und an dem Kochgeschirr 50 eine Anzeigeeinrichtung 51 vorgesehen, auf welchen wenigstens zeitweise jeweils wenigstens eine gleiche und/oder korrespondierende Eigenschaft dargestellt wird. So erfolgt eine Verknüpfung bzw. Zuordnung von einer Kochzone 4 bzw. einem Kochgeschirr 50 zu einem bestimmten Bedienelement 101 der Bedieneinrichtung 100. Mittels der Kommunikationseinrichtung 150 kann vorzugsweise eine Topfpositionserkennung vorgenommen werden und es wird jeweils über die Kommunikationseinrichtung übermittelt, welche Eigenschaft auf den Anzeigeeinrichtungen 51, 102 angezeigt werden soll.

In Figur 2 ist rein schematisch ein weiteres Ausführungsbeispiel eines erfindungsgemäßen Kochsystems 200 dargestellt. Auch hier ist eine Kochfeldeinrichtung 1 bzw. ein Flächeninduktionskochfeld 5 vorgesehen, wobei unterhalb der Aufstellfläche 2 eine Vielzahl von Induktionseinrichtungen 3 vorgesehen sind, welche zu bestimmten Kochzonen 4 einzelnen oder auch zu mehren zusammengeschlossen werden können. Das Flächeninduktionskochfeld 5 ist dabei hier als vollintegriertes Kochfeld ausgebildet.

In dem gezeigten Ausführungsbeispiel umfasst die Bedieneinrichtung 100 ein Bedienelement 101, welches hier eine Anzeigeeinrichtung 102 aufweist. Dabei ist das Bedienelement 1 hier als Bedienknebel 108 ausgeführt, welcher hier für die Steuerung mehrerer Kochzonen 4 vorgesehen ist.

Die Anzeigeeinrichtung 2 umfasst in dem hier gezeigten Ausführungsbeispiel eine Leuchteinrichtung 103, wobei hier die Leuchteinrichtung 103 einen Leuchtring 109 umfasst. Dabei kann je nach Ausgestaltung die Leuchteinrichtung 103 als Leuchtelement 104 ein lichtauskoppelndes Element 106 umfassen, welches beispielsweise über einen Lichtleiter 110 an eine Lichtquelle 105 angeschlossen ist.

Die Kochgeschirre 50 umfassen in dem hier gezeigten Ausführungsbeispiel jeweils an den Griffen 58 Anzeigeeinrichtungen 51, welche hier auch Leuchteinrichtungen 52 umfassen.

In dem hier gezeigten Ausführungsbeispiel ist dargestellt, dass die Anzeigeeinrichtung 102 an den Bedienknebel 108 die gleiche Eigenschaft anzeigt wie die Anzeigeeinrichtungen 51 des großen Kochgeschirrs 50 auf der rechten Seite. Dies ist durch die entsprechende Markierung bzw. angezeigte Eigenschaft der Anzeigeeinrichtungen 51, 102 dargestellt.

Wenn Benutzer ein anderes Kochgeschirr 50 steuern bzw. ein Leistungsparameter zu einem anderen Kochgeschirr 50 einstellen möchte, kann an den Bedienknebel 108 in einer vorgegebenen Art und Weise die Bedienung zu einer anderen Kochzone 4 umstellen. Dann wird eine Anzeigeeinrichtung 102 des Bedienknebels 108 eine andere gleiche und/oder korrespondierende Eigenschaft zu einem anderen Kochgefäß 50 angezeigt.

In Figur 3 ist ein nächstes Ausführungsbeispiel eines erfindungsgemäßen Kochsystems 200 rein schematisch dargestellt, welches vom Grundaufbau den zuvor gezeigten Ausführungsbeispielen entspricht. Dabei umfasst das Kochgeschirr 50 als Anzeigeeinrichtungen 51 eine Leuchteinrichtung 52, wobei hier in der Wandung 59 des Kochgeschirrs 50 als Leuchtelement 53 ein Leuchtstreifen vorgesehen ist.

Die Bedieneinrichtung 100 ist in dem gezeigten Ausführungsbeispiel der Kochfeldeinrichtung 1 zugeordnet, wobei hier ein Display 107 in die Aufstellfläche 2 der Kochfeldeinrichtung 1 eingelassen ist. Auf diesem Display 107 werden verschiedene Bedienelemente 1 zur Verfügung gestellt. Dabei sind die entsprechenden Bedienelemente 101 mit der gleichen bzw. einer korrespondierenden Eigenschaft angezeigt, wie auf den Leuchtelementen 153 des Kochgeschirrs 50. Es ist angedeutet, dass bei der Verwendung eines Displays 107 die Anordnung der Kochgeschirre 50 auf der Aufstellfläche 2 als Orientierung angezeigt werden kann, wobei die Symbole bzw. Bedienelemente 101 zu den einzelnen Kochgeschirren 50 auch in der Größe entsprechend den auf der Aufstellfläche 2 aufstehenden Kochgeschirre 50 angepasst sein kann.

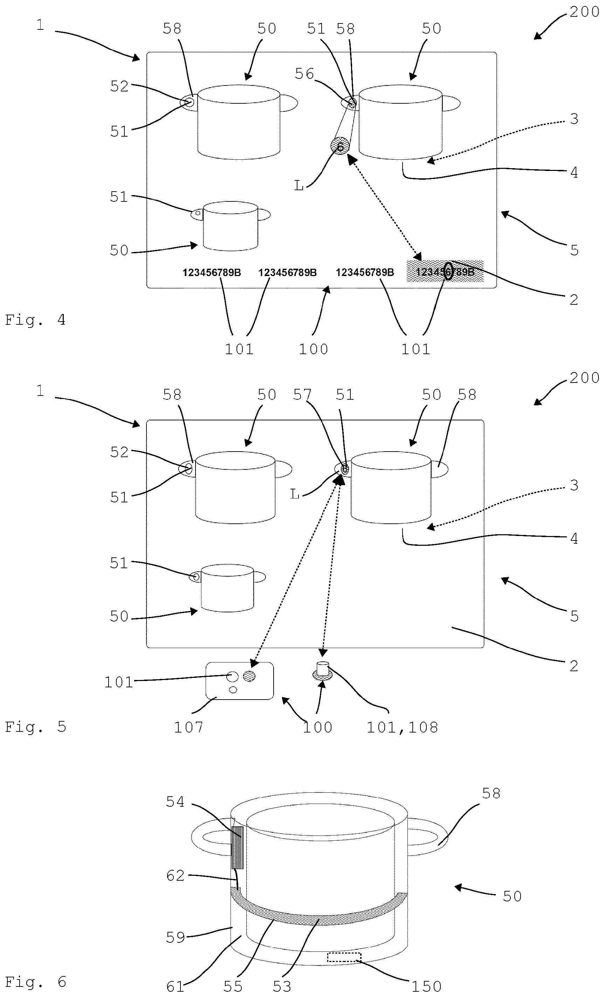

In Figur 4 ist ein nächstes Ausführungsbeispiel eines erfindungsgemäßen Kochsystems 200 rein schematisch dargestellt, wobei hier erneut drei Kochgeschirre 50 bzw. Töpfe auf der Aufstellfläche 2 der Kochfeldeinrichtung 1 aufstehen.

Auch hier ist in den Griffen 58 des Kochgeschirrs 50 eine Anzeigeeinrichtung 51 vorgesehen, wobei die Anzeigeeinrichtungen 51 in dem hier gezeigten Ausführungsbeispiel jeweils eine Projektionseinrichtung 56 aufweist. Über diese Projektionseinrichtung 56 kann eine entsprechende Eigenschaft passend zu einem Bedienelement 101 auf die Aufstellfläche oder auch beispielsweise an eine Wand hinter der Kochfeldeinrichtung 1 und/ oder auch an die Decke projiziert werden. Neben der Projektion der gleichen und/oder korrespondierenden Eigenschaft zu einem bestimmten Bedienelement 101 kann gleichzeitig hier eine eingestellte Leistungsstufen L bzw. ein Leistungsparameter L zu dem entsprechenden Kochgeschirr 50 angezeigt werden. Der eingestellte Leistungsparameter L ist an dem entsprechend gekennzeichneten Bedienelement 101 eingestellt und wird vorzugsweise auch dort angezeigt.

Auch in diesem Ausführungsbeispiel ist die Bedieneinrichtung 100 der Kochfeldeinrichtung 1 zugeordnet, wobei hier die Anzeigeeinrichtung 102 in die Aufstellfläche 2 integriert ist.

In Figur 5 ist ein weiteres Ausführungsbeispiel dargestellt, in welchem die Anzeigeeinrichtungen 51 der Kochgeschirre 50 in die jeweiligen Griffe 58 integriert sind.

Anders als in den zuletzt gezeigten Ausführungsbeispielen ist hier die Bedieneinrichtung 100 separat bzw. als separate Baugruppe bzw. extern vorgesehen. Dabei umfasst hier die Bedieneinrichtung als Bedienelement 101 einen Bedienknebel 2, der wie schon zuvor beschrieben aufgebaut ist.

Zudem ist ein Display 107 vorgesehen, über welches zusätzlich bzw. alternativ eine Steuerung der einzelnen Kochzonen 4 bzw. einzelnen Kochgeschirre 50 möglich ist.

Dabei kann ein solches Display 107 insbesondere durch jede Art von mobilem Eingabegerät zur Verfügung gestellt werden. Insbesondere ist es möglich, dass beispielsweise auf einem Smartphone, einem Tablett oder einer anderen externen Anzeige eine Einstellung zu der Kochfeldeinrichtung 1 bzw. zu den Kochzonen 4 erfolgt. Dieses insbesondere über das Verwenden einer entsprechenden App möglich.

In den Figuren 6 bis 9 sind unterschiedliche Ausführungsformen von erfindungsgemäßem Kochgeschirr 50 dargestellt.

Dabei ist in Figur 6 rein schematisch dargestellt, dass das Kochgeschirr 50 eine doppelwandige Wandung 61 aufweisen kann. Die Anzeigeeinrichtung 51 des hier gezeigten Kochgeschirrs 50 umfasst eine Leuchteinrichtung 52 mit einem Leuchtelement 53, welches hier als Leuchtstreifen ausgebildet ist.

Dabei ist eine Lichtquelle 54 der Leuchteinrichtung 52 in der doppelwandigen Wandung 51 angeordnet. Das Leuchtelement 53 bzw. der Leuchtstreifen ist das lichtauskoppelnde Element 55 vorgesehen, welches sich entlang der Wandung 59 des Kochgeschirrs 50 erstreckt. Die Lichtquelle 54 ist dabei in dem hier gezeigten Ausführungsbeispiel über ein Lichtleiter 62 mit dem lichtauskoppelnden Element 106 verbunden.

Rein schematische ist in dem hier gezeigten Ausführungsbeispiel auch ein Teil der Kommunikationseinrichtung 150 des Kochgeschirrs 50 dargestellt, über welchen die Kommunikation mit der Kochfeldeinrichtung 1 erreicht wird.

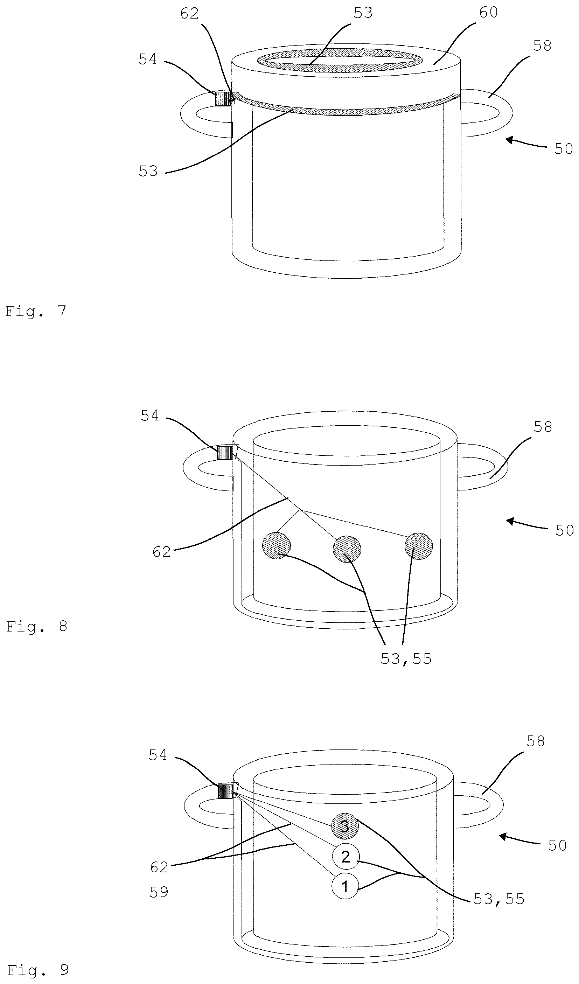

In Figur 7 ist ein weiteres Ausführungsbeispiel eines erfindungsgemäßen Kochgeschirrs 50 rein schematisch dargestellt. Auch hier umfasst die Anzeigeeinrichtung 51 eine Leuchteinrichtung 52, wobei die Leuchteinrichtung 52 auch hier eine Lichtquelle 54 und als Leuchtelement 53 ein lichtauskoppelndes Element 54 umfasst. Dabei ist die Lichtquelle 105 in dem gezeigten Ausführungsbeispiel über einen Lichtleiter 62 verbunden.

In dem gezeigten Ausführungsbeispiel umfasst das Kochgeschirr 50 ein weiteres Leuchtelement 53, welches hier in den Deckel 60 des Kochgeschirrs integriert ist.

In Figur 8 ist eine weitere bevorzugte Ausgestaltung eines erfindungsgemäßen Kochgeschirrs 50 rein schematisch dargestellt. Hier umfasst die Anzeigeeinrichtungen 51 drei Leuchtelemente 53, welche je nach Ausgestaltung unterschiedlich gefärbt oder auch in unterschiedlichen Kombinationen beleuchtet werden können. Dazu ist auch hier eine Lichtquelle 54 vorgesehen, welche über Lichtleiter 62 mit den einzelnen Leuchtelementen 53 bzw. den einzelnen lichtauskoppelnden Elementen 55 verbunden sind. Beispielsweise können unterschiedliche Kombinationen von beleuchteten oder gefärbten Leuchtelementen 53 unterschiedliche Kochzonen 4 codieren.

In Figur 9 ist ein weiteres Ausführungsbeispiel ähnlich zu dem in Figur 8 gezeigten Ausführungsbeispiel rein schematisch dargestellt, wobei in bzw. an den Leuchtelementen 53 bzw. lichtauskoppelnden Elementen 55 zulässig eine Nummerierung vorgesehen ist. Über die Illumination des entsprechenden Leuchtelements 53 kann eine Zuordnung zu einem Bedienelement 101 erfolgen.

Hier ist die Anordnung der Leuchtelemente 53 vertikal, in Figur 8 ist eine horizontale Anordnung vorgesehen. Je nach Ausgestaltung kann auch eine beliebige Anordnung zweckmäßig eingesetzt werden.

### Bezugszeichenliste

- 1: Kochfeldeinrichtung
- 2: Aufstellfläche
- 3: Induktionseinrichtung
- 4: Kochzone
- 5: Flächeninduktionskochfeld

- 50: Kochgeschirr
- 51: Anzeigeeinrichtung
- 52: Leuchteinrichtung
- 53: Leuchtelement
- 54: Lichtquelle
- 55: lichtauskoppelndes Element
- 56: Projektionseinrichtung
- 57: Display
- 58: Griff
- 59: Wandung
- 60: Deckel
- 61: doppelwandige Wandung
- 62: Lichtleiter

- 100: Bedieneinrichtung
- 101: Bedienelement
- 102: Anzeigeeinrichtung
- 103: Leuchteinrichtung
- 104: Leuchtelement
- 105: Lichtquelle
- 106: lichtauskoppelndes Element
- 107: Display
- 108: Bedienknebel
- 109: Ring
- 110: Lichtleiter

- 150: Kommunikationseinrichtung

- 200: Kochsystem

- 300: Küchenzeile
- 301: Arbeitsplatte

- L: Leistungsparameter

## Patentansprüche

1. Kochsystem (200) umfassend
wenigstens eine Kochfeldeinrichtung (1), wenigstens ein Kochgeschirr (50), wenigstens eine Bedieneinrichtung (100) mit wenigstens einem Bedienelement (101) und wenigstens eine Kommunikationseinrichtung (150),
wobei mittels der Kommunikationseinrichtung (150) eine Kommunikation zwischen der Kochfeldeinrichtung (1) und dem Kochgeschirr (50) möglich ist,
wobei die Kochfeldeinrichtung (1) wenigstens eine Aufstellfläche (2) für das Kochgeschirr (50) und wenigstens zwei unterhalb der Aufstellfläche (2) angeordnete Induktionseinrichtungen (3) umfasst, welche einzeln und/oder zusammen als Kochzone (4) je nach Aufstellposition des Kochgeschirrs (50) mittels der Bedieneinrichtung (100) angesteuert werden können,
die Bedieneinrichtung (100) wenigstens eine Anzeigeeinrichtung (102) umfasst und das Kochgeschirr (50) wenigstens eine Anzeigeeinrichtung (51) umfasst,
wobei über das wenigstens zeitweise Anzeigen wenigstens einer gleichen und/oder korrespondierenden Eigenschaft auf den Anzeigeeinrichtungen (51, 102) eine Zuordnung des Kochgeschirrs (50) zu dem Bedienelement (101) erfolgt,
**dadurch gekennzeichnet, dass**
die gleiche oder korrespondierende Eigenschaft auf der Anzeigeeinrichtung (51) des Kochgeschirrs (50) und auf der Anzeigeeinrichtung (102) der Bedieneinrichtung (100) ausgewählt ist aus der Gruppe von Eigenschaften umfassend eine gleiche Zahl bzw. Ziffer und/oder eine gleiche Form und/oder ein gleiches Symbol.

2. Kochsystem (200) nach Anspruch 1, wobei
die gleiche oder korrespondierende Eigenschaft eine Leistungsstufe und/oder eine Temperatur und/oder eine Programmauswahl repräsentiert.

3. Kochsystem (200) nach einem der vorhergehenden Ansprüche, wobei
die Anzeigeeinrichtung (51) des Kochgeschirrs (50) und/oder die Anzeigeeinrichtung (102) der Bedieneinrichtung (100) wenigstens eine Leuchteinrichtung (52, 104) mit wenigstens einem Leuchtelement (53, 104) umfasst.

4. Kochsystem (100) nach einem der vorhergehenden Ansprüche, wobei
die Anzeigeeinrichtung (51) des Kochgeschirrs (50) und/oder die Anzeigeeinrichtung (102) der Bedieneinrichtung (100) wenigstens eine Projektionseinrichtung (56) umfasst.

5. Kochsystem (200) nach einem der vorhergehenden Ansprüche 4 bis 5, wobei
das Leuchtelement (53) an wenigstens einem Griff (58) und/oder an wenigstens einer Wandung (59) des Kochgeschirrs (50) und/oder an wenigstens einem Deckel (60) des Kochgeschirrs (50) angeordnet ist.

6. Kochsystem (200) nach einem der vorhergehenden Ansprüche, wobei
das Bedienelement (101) als Bedienknebel (108) ausgebildet ist und wobei die Anzeigeeinrichtung (102) an dem Bedienknebel (10) vorgesehen ist.

7. Kochsystem (200) nach einem der vorhergehenden Ansprüche, wobei
nur ein Bedienelement (101) für mehrere Kochzonen (4) bzw. Kochgeschirre (50) vorgesehen ist und dass ein Benutzer die einzelnen Kochzonen (4) bzw. Kochgeschirre (50) durch das Anwählen einer bestimmten angezeigten Eigenschaft steuern kann.

8. Kochsystem (200) nach einem der vorhergehenden Ansprüche, wobei
nur ein Bedienelement (101) für mehrere Kochzonen (4) bzw. Kochgeschirre (50) vorgesehen ist und eine Zuordnung durch die unterschiedlichen Eigenschaften erfolgt, wobei vorzugsweise für jedes der Kochgeschirre (50) eine andere Eigenschaft verwendet ist.

9. Kochsystem (200) nach einem der vorhergehenden Ansprüche, **dadurch gekennzeichnet, dass** wenigstens eine Lichtquelle (54) in wenigstens einem Griff (60) des Kochgeschirrs (50) vorgesehen ist und dass wenigstens ein lichtauskoppelndes Element (55) an wenigstens einer Wandung (59, 61) des Kochgeschirrs (50) und/oder an wenigstens einem Deckel (60) des Kochgeschirrs (50) vorgesehen ist.

10. Kochsystem (200) nach einem der vorhergehenden Ansprüche, **dadurch gekennzeichnet, dass** mittels der Anzeigeeinrichtung (51) des Kochgeschirrs (50) wenigstens ein Leistungsparameter (L) der zugehörigen Kochzone (4) anzeigbar ist.

11. Kochgeschirr (50) ausgebildet zur Verwendung in einem Kochsystem (200) nach einem der vorhergehenden Ansprüche 1 bis 10.

12. Kochfeldeinrichtung (1) ausgebildet zur Verwendung in einem Kochsystem (200) nach einem der vorhergehenden Ansprüche 1 bis 10.

13. Bedieneinrichtung (100) ausgebildet zur Verwendung in einem Kochsystem (200) nach einem der vorhergehenden Ansprüche 1 bis 10.

14. Verfahren zum Betreiben eines Kochsystems (200) nach einem der vorhergehenden Ansprüche 1 bis 10, **dadurch gekennzeichnet, dass** über das wenigstens zeitweise Anzeigen wenigstens einer gleichen und/oder korrespondierenden Eigenschaft auf der Anzeigeeinrichtung (102) der Bedieneinrichtung (100) und der Anzeigeeinrichtung (51) des Kochgeschirrs (50) eine Zuordnung des Kochgeschirrs (50) zu einem Bedienelement (101) erfolgt.

15. Verfahren nach dem vorhergehenden Anspruch, wobei nur ein Bedienelement (101) vorgesehen ist und wobei ein Benutzer ein bestimmtes zu steuerndes Kochgeschirr (50) durch das Anwählen einer bestimmten angezeigten Eigenschaft auswählt.

## Claims

1. Cooking system (200) comprising
at least one hob device (1), at least one cooking utensil (50), and at least one control device (100) having at least one control element (101) and at least one communication device (150),
wherein communication between the hob device (1) and the cooking utensil (50) is possible by means of the communication device (150),
wherein the hob device (1) comprises at least one placement surface (2) for the cooking utensil (50), and at least two induction devices (3), which are arranged below the placement surface (2) and can be controlled by means of the control device (100), individually and/or together as a cooking zone (4), depending on the placement position of the cooking utensil (50),
the control device (100) comprises at least one display device (102) and the cooking utensil (50) comprises at least one display device (51),
wherein the cooking utensil (50) is assigned to the control element (101) by at least temporarily displaying at least one identical and/or corresponding property on the display devices (51, 102),
**characterised in that**
the same or corresponding property on the display device (51) of the cooking utensil (50) and on the display device (102) of the control device (100) is selected from the group of properties comprising an identical number or digit and/or an identical shape and/or an identical symbol.

2. Cooking system (200) according to claim 1, wherein the same or corresponding property represents a power level and/or a temperature and/or a program selection.

3. Cooking system (200) according to either of the preceding claims, wherein the display device (51) of the cooking utensil (50) and/or the display device (102) of the control device (100) comprises at least one lighting device (52, 104) having at least one lighting element (53, 104).

4. Cooking system (100) according to any of the preceding claims, wherein the display device (51) of the cooking utensil (50) and/or the display device (102) of the control device (100) comprises at least one projection device (56).

5. Cooking system (200) according to either of the preceding claims 4 to 5, wherein the lighting element (53) is arranged on at least one handle (58) and/or on at least one wall (59) of the cooking utensil (50) and/or on at least one lid (60) of the cooking utensil (50).

6. Cooking system (200) according to any of the preceding claims, wherein the control element (101) is designed as a control toggle (108) and wherein the display device (102) is provided on the control toggle (10).

7. Cooking system (200) according to any of the preceding claims, wherein only one control element (101) is provided for a plurality of cooking zones (4) or cooking utensils (50), and that a user can control the individual cooking zones (4) or cooking utensils (50) by selecting a specific displayed property.

8. Cooking system (200) according to any of the preceding claims, wherein only one control element (101) is provided for a plurality of cooking zones (4) or cooking utensils (50) and an assignment is performed in accordance with the different properties, wherein preferably a different property is used for each of the cooking utensils (50).

9. Cooking system (200) according to any of the preceding claims, **characterised in that** at least one light source (54) is provided in at least one handle (60) of the cooking utensil (50), **and in that** at least one light out-coupling element (55) is provided on at least one wall (59, 61) of the cooking utensil (50) and/or on at least one lid (60) of the cooking utensil (50).

10. Cooking system (200) according to any of the preceding claims, **characterised in that** at least one power parameter (L) of the associated cooking zone (4) can be displayed by means of the display device (51) of the cooking utensil (50).

11. Cooking utensil (50) designed for use in a cooking system (200) according to any of the preceding claims 1 to 10.

12. Hob device (1) designed for use in a cooking system (200) according to any of the preceding claims 1 to 10.

13. Control device (100) designed for use in a cooking system (200) according to any of the preceding claims 1 to 10.

14. Method for operating a cooking system (200) according to any of the preceding claims 1 to 10, **characterised in that,** by at least temporarily displaying at least one identical and/or corresponding property on the display device (102) of the control device (100) and the display device (51) of the cooking utensil (50), the cooking utensil (50) is assigned to a control element (101).

15. Method according to the preceding claim, wherein only one control element (101) is provided and wherein, by selecting a specific displayed property, a user selects a specific cooking utensil (50) to be controlled.

## Revendications

1. Système de cuisson (200) comprenant
au moins un dispositif formant plaque de cuisson (1), au moins un ustensile de cuisson (50), au moins un dispositif de manipulation (100) comportant au moins un élément de manipulation (101) et au moins un dispositif de communication (150),
dans lequel une communication entre le dispositif formant plaque de cuisson (1) et l'ustensile de cuisson (50) est possible au moyen du dispositif de communication (150),
dans lequel le dispositif formant plaque de cuisson (1) comprend au moins une surface de mise en place (2) pour l'ustensile de cuisson (50) et au moins deux dispositifs d'induction (3) disposés en dessous de la surface de mise en place (2), lesquels dispositifs d'induction peuvent être commandés individuellement et/ou conjointement en tant que zone de cuisson (4) selon une position de mise en place de l'ustensile de cuisson (50) au moyen du dispositif de manipulation (100),
le dispositif de manipulation (100) comprend au moins un dispositif d'affichage (102) et l'ustensile de cuisson (50) comprend au moins un dispositif d'affichage (51),
dans lequel une affectation de l'ustensile de cuisson (50) à l'élément de manipulation (101) est effectuée par l'intermédiaire de l'affichage au moins temporaire d'au moins une propriété identique et/ou correspondante sur les dispositifs d'affichage (51, 102),
**caractérisé en ce que**
la propriété identique ou correspondante sur le dispositif d'affichage (51) de l'ustensile de cuisson (50) et sur le dispositif d'affichage (102) du dispositif de manipulation (100) est sélectionnée dans le groupe de propriétés comprenant un nombre ou chiffre identique et/ou une forme identique et/ou un symbole identique.

2. Système de cuisson (200) selon la revendication 1, dans lequel
la propriété identique ou correspondante représente un niveau de puissance et/ou une température et/ou une sélection de programme.

3. Système de cuisson (200) selon l'une des revendications précédentes, dans lequel
le dispositif d'affichage (51) de l'ustensile de cuisson (50) et/ou le dispositif d'affichage (102) du dispositif de manipulation (100) comprennent au moins un dispositif lumineux (52, 104) comportant au moins un élément lumineux (53, 104).

4. Système de cuisson (100) selon l'une des revendications précédentes, dans lequel
le dispositif d'affichage (51) de l'ustensile de cuisson (50) et/ou le dispositif d'affichage (102) du dispositif de manipulation (100) comprennent au moins un dispositif de projection (56).

5. Système de cuisson (200) selon l'une des revendications précédentes 4 à 5, dans lequel
l'élément lumineux (53) est disposé sur au moins une poignée (58) et/ou sur au moins une paroi (59) de l'ustensile de cuisson (50) et/ou sur au moins un couvercle (60) de l'ustensile de cuisson (50).

6. Système de cuisson (200) selon l'une des revendications précédentes, dans lequel
l'élément de manipulation (101) est réalisé sous forme de manette de manipulation (108) et dans lequel le dispositif d'affichage (102) est prévu sur la manette de manipulation (10).

7. Système de cuisson (200) selon l'une des revendications précédentes, dans lequel un seul élément de manipulation (101) est prévu pour plusieurs zones de cuisson (4) ou ustensiles de cuisson (50) et en ce qu'un utilisateur peut commander les différentes zones de cuisson (4) ou ustensiles de cuisson (50) en sélectionnant une propriété affichée déterminée.

8. Système de cuisson (200) selon l'une des revendications précédentes, dans lequel
un seul élément de manipulation (101) est prévu pour plusieurs zones de cuisson (4) ou ustensiles de cuisson (50) et une affectation est effectuée par les différentes propriétés, dans lequel une autre propriété est de préférence utilisée pour chacun des ustensiles de cuisson (50).

9. Système de cuisson (200) selon l'une des revendications précédentes, **caractérisé en ce qu'au** moins une source de lumière (54) est prévue dans au moins une poignée (60) de l'ustensile de cuisson (50) et **en ce qu'**au moins un élément de découplage de lumière (55) est prévu sur au moins une paroi (59, 61) de l'ustensile de cuisson (50) et/ou sur au moins un couvercle (60) de l'ustensile de cuisson (50).

10. Système de cuisson (200) selon l'une des revendications précédentes, **caractérisé en ce qu'au** moins un paramètre de puissance (L) de la zone de cuisson (4) associée peut être affiché au moyen du dispositif d'affichage (51) de l'ustensile de cuisson (50).

11. Ustensile de cuisson (50) réalisé pour être utilisé dans un système de cuisson (200) selon l'une des revendications précédentes 1 à 10.

12. Dispositif formant plaque de cuisson (1) réalisé pour être utilisé dans un système de cuisson (200) selon l'une des revendications précédentes 1 à 10.

13. Dispositif de manipulation (100) réalisé pour être utilisé dans un système de cuisson (200) selon l'une des revendications précédentes 1 à 10.

14. Procédé permettant de faire fonctionner un système de cuisson (200) selon l'une des revendications précédentes 1 à 10, **caractérisé en ce qu'une** affectation de l'ustensile de cuisson (50) à un élément de manipulation (101) est effectuée par l'intermédiaire de l'affichage au moins temporaire d'au moins une propriété identique et/ou correspondante sur le dispositif d'affichage (102) du dispositif de manipulation (100) et sur le dispositif d'affichage (51) de l'ustensile de cuisson (50).

15. Procédé selon la revendication précédente, dans lequel un seul élément de manipulation (101) est prévu et dans lequel un utilisateur sélectionne un ustensile de cuisson (50) à commander déterminé en sélectionnant une propriété affichée déterminée.
